# EUROPÄISCHE PATENTSCHRIFT

(11) **EP 1 711 547 B1**
(45) Veröffentlichungstag und Bekanntmachung des Hinweises auf die Patenterteilung: **13.07.2016**
(21) Anmeldenummer: 05700732.0
(22) Anmeldetag: 07.01.2005
(51) Int. Cl.: C08G 18/08, C09D 175/04

(54) **BESCHICHTUNGSMITTELZUSAMMENSETZUNG**
COATING AGENT COMPOSITION
COMPOSITION D'AGENT DE REVETEMENT

(30) Priorität: 16.01.2004 DE 102004002525
(43) Veröffentlichungstag der Anmeldung: 18.10.2006
(73) Patentinhaber: Covestro Deutschland AG, 51373 Leverkusen (DE)
(72) Erfinder: RISCHE, Thorsten, 59423 Unna (DE); POHL, Torsten, 51377 Leverkussen (DE); MEIXNER, Jürgen, 47803 Krefeld (DE); KLIPPERT, Uwe, 51399 Burscheid (DE); FELLER, Thomas, 52659 Solingen (DE)
(74) Vertreter: Levpat
(86) Internationale Anmeldenummer: PCT/EP2005/000073
(87) Internationale Veröffentlichungsnummer: WO 2005/068527

(56) Entgegenhaltungen:
- EP-A- 0 404 371
- EP-A- 0 669 352
- EP-A- 1 418 192
- WO-A-03/060017

## Beschreibung

Die Erfindung betrifft neue thermovergilbungsstabile Beschichtungszusammensetzungen, deren Herstellung und Verwendung.

Polyurethanpolyharnstoffdispersionen (PUR-Dispersionen) und wässrige Zubereitungen von PUR-Dispersionen sind bekannter Stand der Technik. Eine Übersicht der verschiedenen Typen und Herstellverfahren von PUR-Dispersionen und deren wässriger Zubereitungen findet sich beispielsweise in "Houben-Weyl: Methoden der Organischen Chemie, Band E 20, S. 1659-1692" oder in "Ullmann's Encyclopedia of Industrial Chemistry (1992) Vol. A21, S. 677-682". Sie finden aufgrund ihrer Kombination aus positiven Eigenschaften wie mechanischer Festigkeit, hoher Haftung zu unterschiedlichen Substraten, Lösemittelbeständigkeit, Glanz usw. breite Verwendung z.B. als Lacke und Beschichtungen. Ein wichtiges Einsatzgebiet wässriger Zubereitungen ionisch modifizierter PUR-Dispersionen liegt im Bereich der Lackierung von Kunststoffteilen.

Aufgrund ästhetischer und technischer Anforderungen werden Kunststoffteile üblicherweise lackiert, um den Kunststoff vor äußeren Einflüssen, wie Sonnenlicht, chemischer, thermischer und mechanischer Beanspruchung zu schützen, um bestimmte Farbtöne und Farbeffekte zu erzielen, um Fehlstellen der Kunststoffoberfläche zu überdecken oder um der Kunststoffoberfläche einen angenehmen Griff (Haptik) zu verleihen. Um die haptischen Eigenschaften von Kunststoffteilen zu verbessern werden in den letzten Jahren vermehrt sogenannte Softfeel Lacke eingesetzt. "Softfeel-Effekt" im Sinne der vorliegenden Erfindung bezeichnet ein besonderes Griffempfinden (Haptik) der lackierten Oberfläche; diese Haptik lässt sich mit Begriffen wie samtig, weich, gummiartig, warm umschreiben, während sich z.B. die Oberfläche einer lackierten Auto-Karosse oder auch eine unlackierte oder mit einem üblichen Klar- oder Decklack beschichtete Kunststoff-Platte z.B. ABS, Makrolon® (Polycarbonat, Bayer AG) oder Plexiglas (Polymethylmethacrylat) kalt und glatt anfühlt. Dem Trend folgend Emissionen von Lösemitteln in die Umwelt zu vermeiden, haben sich in den letzten Jahren wässrige Softfeel-Lacke auf Basis der Polyurethanchemie durchgesetzt, wie sie beispielhaft die Lehre der DE 44 06 159 offenbart wurden. Diese Lacke ergeben neben einem ausgezeichneten Softfeel-Effekt auch Beschichtungen mit guter Beständigkeit und Schutzwirkung für das Kunststoffsubstrat. Inzwischen hat sich aber gezeigt, dass diese Lacke und Beschichtungen oftmals eine nur unzureichende Vergilbungsstabilität aufweisen.

Die Aufgabe der vorliegenden Erfindung bestand daher in der Bereitstellung von Beschichtungsmittel die neben dem o.g. mechanischen und haptischen Eigenschaften, im Vergleich zu Beschichtungsmitteln des Stands der Technik, zu signifikant thermovergilbungsstabileren bzw. thermovergilbungsärmeren Beschichtungen führen.

Wie beispielsweise in DE-A 44 06 159 beschrieben, bestehen Kunststoffbeschichtungsmittel mit den gewünschten haptischen Softfeel Eigenschaften zu einem Teil aus PUR-Dispersionen, die über keine nennenswerten Mengen an hydroxyfunktionellen Gruppen aufweisen.

Aus dem Stand der Technik sind zahlreiche Stabilisatoren und Additive bekannt, die eine Thermovergilbung von Bindemitteln verringern können. Diese Systeme haben im Bereich der o.g. wässrigen nicht nennenswert hydroxyfunktionellen PUR-Dispersion allerdings eine nur unzureichende vergilbungshemmende Wirkung oder führen zu schlechteren anwendungstechnischen Eigenschaften der Dispersionen und Beschichtungen wie schlechteres Zug-Dehnungsverhalten oder schlechte Verträglichkeiten gegenüber anderen Lack- bzw. Beschichtungskomponenten. Ferner neigen die bekannten Additive zur Migration aus den hergestellten Beschichtungen, so dass im Laufe der Zeit unerwünschtes Fogging und eine nachlassende Vergilbungsstabilisierung eintreten.

US-A 5,137,967 beschreibt die Herstellung thermovergilbungsstabiler, carboxylathaltiger PUR-Dispersionen, die nach dem sogenannten Prepolymer-Mischverfahren hergestellt werden. Zur Vergilbungsstabilisierung wird Hydrazin zur Kettenverlängerung des Prepolymers und Dimethylaminoethanol (DMAE) als Neutralisationsamin für die Carbonsäuregruppen verwendet.

In der DE-A 32 38 169 wird ein Verfahren zur Herstellung von PUR-Dispersionen beschrieben, bei dem Hydrazin oder Hydrazide als Additive oder als Kettenverlängerer eingesetzt wird. Es werden ausschließlich anionische, carboxylatfunktionelle PUR-Dispersionen nach dem Prepolymer-Mischverfahren beschrieben.

Grundsätzlich sind Hydrazine und Hydrazide als Kettenverlängerer in Polyurethanen beispielsweise aus US-A 4.147 679 oder DE-A 23 14 513 bekannt. Zum Teil werden sie auch in Mischungen mit anderen Kettenverlängerern wie Diaminen eingesetzt (US-A 3 415 768). Sie dienen zur Verbesserung von Flexibilität, Härte, Beständigkeit und Trocknung der Beschichtungen.

Das Dokument WO 03/060017 A offenbart eine gegen Thermovergilbung stabilisierte, wässrige PUR-Beschichtungszusammensetzung, die ein Gemisch von HALS-Ring enthaltenden Aminen und Säurehydrazide als Stabilisierungsmittel enthält.

Es wurde nun gefunden, dass Beschichtungsmittel enthaltend nichtfunktionelle PUR-Dispersionen, hergestellt nach einem definierten Verfahren unter Verwendung von Hydrazin als Kettenverlängerungskomponente, die gewünschten Eigenschaften ohne den Zusatz von speziellen externen Stabilisatoren/Additiven erfüllen, ohne in der Beschichtung die oben geforderten mechanischen und haptischen Eigenschaften zu verschlechtern.

Gegenstand der vorliegenden Erfindung sind daher Beschichtungsmittel enthaltend
I) eine oder mehrere Dispersionen hydroxylgruppenfreier Polyurethane und/oder Polyurethanharnstoffe (PUR-Dispersionen)
II) eine oder mehrere von den Bestandteilen der Komponente I) verschiedene wässrige Lösungen oder Dispersionen ionisch modifizierter, hydroxylgruppenhaltiger Polyurethane und/oder Polyurethanharnstoffe und
III) mindestens einen Vernetzer und
IV) gegebenenfalls weitere filmbildende Harze
   dadurch gekennzeichnet, dass die in I) eingesetzten PUR-Dispersionen erhältlich sind, in dem
   A) zunächst ein NCO-gruppenhaltiges Polyurethanprepolymer durch Umsetzung von
      A1) Polyisocyanaten mit
      A2) polymeren Polyolen und/oder Polyaminen mit zahlenmittleren Molekulargewichten von 400 bis 8 000 g/mol,
      A3) gegebenenfalls niedermolekularen Verbindungen mit zahlenmittleren Molekulargewichten von 17 bis 400 g/mol ausgewählt aus der Gruppe bestehend aus Monound Polyalkoholen, Mono- und Polyaminen sowie Aminoalkoholen,
      A4) isocyanatreaktiven, ionisch oder potentiell ionisch hydrophilierenden Verbindungen und/oder
      A5) isocyanatreaktiven nichtionisch hydrophilierenden Verbindungen
      A6) gegebenenfalls in aliphatischen Ketonen als Lösemittel
         mit der Maßgabe hergestellt wird, dass in keiner der Komponenten A1) bis A5) primäre oder sekundäre Aminogruppen enthalten sind,
   B) das aus Schritt A) erhaltene Prepolymer entweder in aliphatischen Ketonen gelöst oder, sofern die Herstellung bereits in Anwesenheit von A6) durchgeführt wurde, die Prepolymerlösung gegebenenfalls durch weitere Zugabe aliphatischer Ketone verdünnt wird und
   C) die noch freien NCO-Gruppen des Prepolymers mit einer Kettenverlängerungskomponente enthaltend
      C1) Hydrazin und/oder Hydrazinhydrat und
      C2) gegebenenfalls Verbindungen entsprechend der Definition der Komponenten A2), A3), A4) und/oder A5)
         mit der Maßgabe umgesetzt werden, dass
         - die Verbindungen der Komponente C2) primäre und/oder sekundäre Aminogruppen aufweisen,
         - die Gesamtmengen von C1) und C2) so bemessen sind, dass ein rechnerischer Kettenverlängerungsgrad von 40 bis 200 % erreicht wird und
         - das Mengenverhältnis von C1) und C2) so bemessen ist, dass mindestens 40 % der freien Isocyanatgruppen mit Aminogruppen aus der Komponente C1) kettenverlängert bzw. terminiert werden.

Geeignete Polyisocyanate der Komponente A1) sind die dem Fachmann an sich bekannten aromatischen, araliphatischen, aliphatischen oder cycloaliphatischen Polyisocyanate, welche auch Iminooxadiazindion-, Isocyanurat-, Uretdion-, Urethan-, Allophanat-, Biuret-, Harnstoff-, Oxadiazintrion, Oxazolidinon-, Acylhamstoff- und/oder Carbodiimid-Strukturen aufweisen können. Diese können in Al) einzeln oder in beliebigen Mischungen untereinander eingesetzt werden.

Beispiele für geeignete aromatische, araliphatische, aliphatische oder cycloaliphatische. Polyisocyanate sind durch Phosgenierung oder nach phosgenfreien Verfahren, beispielsweise durch thermische Urethanspaltung, zugängliche Di- bzw. Triisocyanate des Molekulargewichtsbereichs 140 bis 400 g/mol mit aliphatisch, cycloaliphatisch, araliphatisch und/oder aromatisch gebundenen Isocyanatgruppen, wie 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethyl-cyclohexan (Isophorondiisocyanat, IPDI), 4,4'-Diisocyanatodicyclohexylmethan (Desmodur^{®} W, Bayer AG, Leverkusen,) 4-Isocyanatomethyl-1,8-octandiisocyanat (Triisocyanatononan, TIN), ω,ω'-Diisocyanato-1,3-dimethylcyclohexan (H₆XDI), 1-Isocyanato-1-methyl-3-isocyanato-methyl-cyclohexan, 1-Isocyanato-1-methyl-4-isocyanato-methylcyclohexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), 1,5-Diisocyanatonaphthalin, 1,3-Bis(isocyanato-methyl)benzol (XDI) sowie beliebige Mischungen genannter Verbindungen.

Bevorzugt werden in A1) Polyisocyanate oder Polyisocyanatgemische der vorstehend genannten Art mit ausschließlich aliphatisch und/oder cycloaliphatisch gebundenen Isocyanatgruppen eingesetzt.

Besonders bevorzugt sind Hexamethylendiisocyanat, Isophorondiisocyanat, und die isomeren Bis-(4,4'-isocyanatocyclohexyl)methane sowie deren Mischungen.

Wesentlich ist, dass zur Prepolymerherstellung nur solche Verbindungen in A2) bis A5) eingesetzt werden, die keine primären und/oder sekundären Aminofunktionen aufweisen. Im Rahmen der Kettenverlängerung hingegen können in C2) Verbindungen eingesetzt werden, die den Definitionen der Komponenten A2) bis A5) entsprechen, zusätzlich aber primäre und/oder sekundäre Aminogruppen aufweisen.

Polymere Polyole oder Polyamine entsprechend der Definition der Komponente A2) stammen typischerweise aus der Gruppe der Polyacrylate, Polyester, Polylactone, Polyether, Polycarbonate, Polyestercarbonate, Polyacetale, Polyolefine und Polysiloxane und verfügen bevorzugt über eine Funktionalität bezogen auf gegenüber NCO-Gruppen reaktiven Funktionalitäten von 1,5 bis 4.

Besonders bevorzugt sind polymere Polyole der vorstehend genannten Art mit einem zahlenmittleren Molekulargewicht von 600 bis 2 500 g/mol und mit einer OH-Funktionalität von 2 bis 3.

Hydroxylgruppen aufweisende Polycarbonate entsprechend der Definition der Komponente A2) sind durch Reaktion von Kohlensäurederivaten, z.B. Diphenylcarbonat, Dimethylcarbonat oder Phosgen mit Diolen erhältlich.

Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Bevorzugt enthält die Diolkompomponente 40 bis 100 Gew.-% Hexandiol, bevorzugt 1,6-Hexandiol und/oder Hexandiol-Derivate, besonders bevorzugt solche Derivate, die neben endständigen OH-Gruppen Ether- oder Estergruppen aufweisen, wie Produkte, die durch Umsetzung von 1 Mol Hexandiol mit mindestens 1 Mol, bevorzugt 1 bis 2 Mol Caprolacton gemäß der DE-A 17 70 245 oder durch Veretherung von Hexandiol mit sich selbst zum Di- oder Trihexylenglykol erhalten wurden. Die Herstellung solcher Derivate ist z.B. aus der DE-A 15 70 540 bekannt. Auch die in der DE-A 37 17 060 beschriebenen Polyether-Polycarbonatdiole können eingesetzt werden.

Die Hydroxylpolycarbonate sind bevorzugt linear, können jedoch gegebenenfalls durch den Einbau polyfunktioneller Komponenten, insbesondere niedermolekularer Polyole, verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit, und Sorbit, Methylglykosid, 1,3,4,6-Dianhydrohexite.

Als Polyetherpolyole entsprechend der Definition der Komponente A2) geeignet sind die in der Polyurethanchemie an sich bekannten Polytetramethylenglykolpolyether, die z.B. über Polymerisation von Tetrahydrofuran durch kationische Ringöffnung hergestellt werden können.

Darüber hinaus geeignete Polyetherpolyole sind Polyether, wie die unter Verwendung von Startermolekülen hergestellten Polyole aus Styroloxid, Propylenoxid, Butylenoxid oder Epichlorhydrins, insbesondere des Propylenoxids.

Als Polyesterpolyole entsprechend der Definition der Komponente A2) geeignet sind z.B. Umsetzungsprodukte von mehrwertigen, bevorzugt zweiwertigen und gegebenenfalls zusätzlich dreiwertigen Alkoholen mit mehrwertigen, bevorzugt zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome substituiert und/oder ungesättigt sein.

Im Verfahren können Verbindungen entsprechend der Definition der Komponente A3) zur Terminierung des Polyurethan-Prepolymers zugesetzt werden.

Hierzu geeignete Verbindungen sind beispielsweise aliphatische Monoalkohole oder Monoamine des genannten Molekulargewichtsbereichs mit 1 bis 18 C-Atomen, wie z.B. Ethanol, n-Butanol, Ethylenglykol-monobutylether, 2-Ethylhexanol, 1-Octanol, 1-Dodecanol, 1-Hexadecanol, Diethylamin, Dibutylamin, Ethanolamin, N-Methylethanolamin, N,N-Diethanolamin, Amine der Jeffamin^{®} M-Reihe (Huntsman Corp. Europe, Belgien) oder aminofunktionelle Polyethylenoxide und Polypropylenoxide.

Darüber hinaus können Polyole, Aminopolyole oder Polyamine mit einem zahlenmittleren Molekulargewicht unter 400 g/mol im Verfahren eingesetzt werden. Beispielhaft zu nennen sind:
a) Alkandiole bzw. -triole, wie Ethandiol, 1,2- und 1,3-Propandiol, 1,4- und 2,3-Butandiol, 1,5-Pentandiol, 1,3 Dimethylpropandiol, 1,6-Hexandiol, Neopentylglykol, 1,4-Cyclohexandimethanol, 2-Methyl-1,3-propandiol, 2-Ethyl-2-butylpropandiol, Trimethylpentandiol, stellungsisomere Diethyloctandiole, 1,2- und 1,4-Cyclohexandiol, hydriertes Bisphenol A [2,2-Bis(4-hydroxycyclohexyl)propan], 2,2-Dimethyl-3-hydroxypropionsäure-(2,2-dimethyl-3-hydroxypropylester), Trimethylolethan, Trimethylol-propan oder Glycerin,
b) Etherdiole, wie Diethylendiglykol, Triethylenglykol, Tetraethylenglykol, Dipropylenglykol, Tripropylenglykol, 1,3-Butylenglykol oder Hydrochinon-dihydroxyethylether,
c) Esterdiole der allgemeinen Formeln (I) und (II),

   HO-(CH₂)ₓ-CO-O-(CH₂)_{y}-OH (I),

   HO-(CH₂)ₓ-O-CO-R-CO-O(CH₂)x-OH (II),

   in welchen
   R ein Alkylen- oder Arylenrest mit 1 bis 10 C-Atomen, bevorzugt 2 bis 6 C-Atomen,
   x 2 bis 6 und
   y 3 bis 5 ist,
   wie z.B. δ-Hydroxybutyl-ε-hydroxy-capronsäureester, ω-Hydroxyhexyl-γ- hydroxybuttersäureester, Adipinsäure-(β-hydroxyethyl)ester und Terephthal-säure-bis(β-hydroxy-ethyl)-ester und
d) Di- und Polyamine wie z.B. 1,2-Diaminoethan, 1,3 Diaminopropan, 1,6-Diaminohexan, 1,3- und 1,4-Phenylendiamin, 4,4`-Diphenylmethandiamin, Isophorondiamin, Isomerengemisch von 2,2,4- und 2,4,4-Trimethylhexa-methylendiamin, 2-Methyl-pentamethylendiamin, Diethylen-triamin, 1,3- und 1,4-Xylylendiamin, α,α,α',α'-Tetramethyl-1,3- und - 1,4-xylylendiamin, 4,4-Diaminodicyclohexylmethan, aminofunktionelle Polyethylenoxide oder Polypropylenoxide, die unter dem Namen Jeffamino^{®}, D-Reihe (Fa. Huntsman Corp. Europe, Belgien) erhältlich sind, Diethylentriamin und Triethylentetramin. Als Diamine im Sinne der Erfindung sind auch substituierte Hydrazine geeignet, wie z.B. N-Methyl-hydrazin, N,N'-Dimethylhydrazin und deren Homologe sowie Säuredihydrazide der Adipinsäure, β-Methyladipinsäure, Sebacinsäure, Hydracrylsäure und Terephthalsäure, Semicarbazido-alkylenhydrazide, wie z.B. β-Semicarbazidopropionsäurehydrazid (z.B. beschrieben in der DE-A 17 70 591), Semicarbazidoalkylen-carbazinester, wie z.B. 2-Semicarbazidoethylcarbazinester (z.B. beschrieben in der DE-A 19 18 504) oder auch Aminosemicarbazid-Verbindungen, wie z.B. β-Aminoethylsemicarbazido-carbonat (z.B. beschrieben in der DE-A 19 02 931).

Unter ionisch bzw. potentiell ionisch hydrophilierenden Verbindungen werden sämtliche Verbindungen verstanden, die mindestens eine isocyanatreaktive Gruppe sowie mindestens eine Funktionalität, wie z.B. -COOY, -SO₃Y, -PO(OY)₂ (Y beispielsweise = H, NH₄⁺, Metallkation), -NR₂, -NR₃⁺ (R = H, Alkyl, Aryl), aufweisen, die bei Wechselwirkung mit wässrigen Medien ein ggf. pH-Wert-abhängiges Dissoziationsgleichgewicht eingeht und auf diese Weise negativ, positiv oder neutral geladen sein kann.

Bevorzugte isocyanatreaktive Gruppen sind Hydroxyl- oder Aminogruppen.

Geeignete ionisch oder potentiell ionisch hydrophilierende Verbindungen entsprechend der Definition der Komponente A4 sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Amino-ethyl)-β-alanin, 2-(2-Amino-ethylamino)-ethansulfonsäure, Ethylendiamin-propyl- oder -butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie Verbindungen, die in kationische Gruppen überführbare, z.B. amin-basierende, Bausteine wie N-Methyl-diethanolamin als hydrophile Äufbaukomponenten enthalten. Weiterhin kann Cyclohexylaminopropansulfonsäure (CAPS) wie z.B. in der WO 01/88006 als Verbindung entsprechend der Definition der Komponente A4) verwendet werden.

Bevorzugte ionische oder potentielle ionische Verbindungen sind solche, die über Carboxy- oder Carboxylat- und/oder Sulfonatgruppen und/oder Ammoniumgruppen verfügen.

Besonders bevorzugte ionische Verbindungen sind solche, die Carboxyl- und/oder Sulfonatgruppen als ionische oder potentiell ionische Gruppen enthalten, wie die Salze von N-(2-Amino-ethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Geeignete nichtionisch hydrophilierende Verbindungen entsprechend der Definition der Komponente A5) sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 3, aber auch Verbindungen der allgemeinen Formel (III), 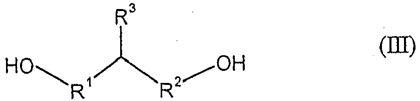 in welcher
R¹ und R² unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
R³ für einen alkoxyterminierten Polyethylenoxidrest steht.

Nichtionisch hydrophilierende Verbindungen sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Di-methylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Im Verfahren wird bevorzugt eine Kombination aus ionischen und nicht-ionischen Hydrophilierungsmitteln entsprechend den Definitionen der Komponenten A4) und A5) verwendet. Besonders bevorzugt sind Kombinationen aus nichtionischen und anionischen Hydrophilierungsmitteln.

Zur Kettenverlängerung in Schritt C) werden Hydrazin und/oder dessen Hydrate als Komponente C1) eingesetzt. Bevorzugt ist die Verwendung von Hydrazin-Monohydrat.

Falls gewünscht können in Komponente C2) auch weitere Kettenverlängerer eingesetzt werden. Diese entsprechen den vorstehenden Definitionen der für A2) bis A5) geeigneten Verbindungen mit der Maßgabe, dass die in C2) eingesetzten Verbindungen -NH₂ und/oder NH-Gruppen aufweisen.

Bevorzugt werden im Verfahren 7 bis 45 Gew.-% Komponente A1), 50 bis 91 Ges.-% Komponente A2), 0 bis 30 Gew.-% Verbindungen A3), 0 bis 12 Gew.-% Komponente A4), 0 bis 15 Gew.-% Komponente A5), 0,1 bis 5,0 Gew.-% C1) (bezogen auf reines Hydrazin N₂H₄) und 0 bis 15 Gew.-% C2) eingesetzt, wobei die Summe von A4) und A5) 0,1 bis 27 Gew.-% beträgt und sich die Summe aller Komponenten zu 100 Gew.-% addiert.

Besonders werden im Verfahren 10 bis 30 Gew.-% Komponente A1), 65 bis 90 Gew.-% Komponente A2), 0 bis 10 Gew.-% Komponente A3), 0 bis 10 Gew.-% Komponente A4), 0 bis 15 Gew.-% Komponente A5), 0,1 bis 3,0 Gew.-% C1) (bezogen auf reines Hydrazin N₂H₄) und 0 bis 10 Gew.-% C2) eingesetzt, wobei die Summe von A4) und A5) 0,1 bis 25 Gew.% beträgt und sich die Summe aller Komponenten zu 100 Gew.-% addieren.

Ganz besonders bevorzugt werden im Verfahren 8 bis 27 Gew.-% Komponente A1), 65 bis 85 Gew.-% Komponente A2), 0 bis 8 Gew.-% Komponente A3), 0 bis 10 Gew.-% Komponente A4), 0 bis 15 Gew.-% Komponente A5), 1,0 bis 2,5 Gew.-% C1) (bezogen auf reines Hydrazin N₂H₄), und 0 bis 8 Gew.-% C2) eingesetzt, wobei die Summe von A4) und A5) 0,1 bis 25 Gew.-% beträgt und sich die Summe der Komponenten zu 100 Gew.-% addieren.

Das Verfahren zur Herstellung der wässrigen PUR-Dispersionen kann in einer oder mehreren Stufen in homogener, oder bei mehrstufiger Umsetzung, teilweise in disperser Phase durchgeführt werden. Nach vollständig oder teilweise durchgeführter Polyaddition aus A1) bis A5) erfolgt ein Dispergier-, Emulgier- oder Lösungsschritt. Im Anschluss erfolgt gegebenenfalls eine weitere Polyaddition oder Modifikation in disperser Phase.

Zur Herstellung der wässrigen PUR-Dispersionen kann das aus dem Stand der Technik bekannte Aceton-Verfahren oder Abkömmlinge davon verwendet werden. Eine Zusammenfassung dieser Methoden findet sich in Methoden der organischen Chemie (Houben-Weyl, Erweiterungs- und Folgebände zur 4. Auflage, Band E20, H. Bartl und J. Falbe, Stuttgart, New York, Thieme 1987, S. 1671- 1682). Bevorzugt ist das Aceton-Verfahren.

Üblicherweise werden im Verfahrensschritt A) die Bestandteile A2) bis A5), die keine primären oder sekundären Aminogruppen aufweisen dürfen und die Polyisocyanatkomponente A1) zur Herstellung eines Polyurethan-Prepolymers ganz oder teilweise vorgelegt und gegebenenfalls mit einem mit Wasser mischbaren aber gegenüber Isocyanatgruppen inerten Lösungsmittel A6) verdünnt und auf höhere Temperaturen, bevorzugt im Bereich von 50 bis 120°C, aufgeheizt.

Geeignete Lösungsmittel sind die üblichen aliphatischen ketofunktionellen Lösemittel wie z.B. Aceton, Butanon, die nicht nur zu Beginn der Herstellung, sondern gegebenenfalls in Teilen auch später zugegeben werden können. Bevorzugt sind Aceton und Butanon. Es ist möglich, die Reaktion unter Normaldruck oder erhöhtem Druck, z. B. oberhalb der Normaldruck-Siedetemperatur eines Lösungsmittels wie z.B. Aceton durchzuführen.

Weiterhin können im Verfahren die zur Beschleunigung der Isocyanatadditionsreaktion bekannten Katalysatoren, wie z.B. Triethylamin, 1,4-Diazabicyclo-[2,2,2]-octan, Dibutylzinnoxid, Zinndioktoat oder Dibutylzinndilaurat, Zinn-bis-(2-ethylhexanoat) oder andere metallorganischen Verbindungen mit vorgelegt oder später zudosiert werden. Bevorzugt ist Dibutylzinndilaurat.

Anschließend werden die gegebenenfalls zu Beginn der Reaktion noch nicht zugegebenen Bestandteile von A1) bis A5) zudosiert.

Bei der Herstellung des Polyurethan-Prepolymeren in Schritt A) beträgt das Stoffmengenverhältnis von Isocyanatgruppen zu mit Isocyanat reaktiven Gruppen 1,0 bis 3,5, bevorzugt 1,1 bis 3,0, besonders bevorzugt 1,1 bis 2,5.

Die Umsetzung der Komponenten A1) bis A5) zum Prepolymer erfolgt teilweise oder vollständig, bevorzugt aber vollständig. Der Umsetzungsgrad wird üblicherweise durch Verfolgung des NCO-Gehalts der Reaktionsmischung übewacht. Dazu können sowohl spektroskopische Messungen, z.B. Infrarot- oder Nahinfrarot-Spektren, Bestimmungen des Brechungsindex als auch chemische Analysen, wie Titrationen, von entnommenen Proben vorgenommen werden. Es werden so Poly-urethan-Prepolymere, die freie Isocyanatgruppen enthalten, in Substanz oder in Lösung erhalten.

Nach oder während der Herstellung der Polyurethan-Prepolymere aus A1) und A2) bis A5) erfolgt, falls dies noch nicht in den Ausgangsmolekülen durchgeführt wurde, die teilweise oder vollständige Salzbildung der anionisch und/oder kationisch dispergierend wirkenden Gruppen. Im Falle anionischer Gruppen werden dazu Basen wie Ammoniak, Ammoniumcarbonat oder -hydrogencarbonat, Trimethylamin, Triethylamin, Tributylamin, Diisopropylethylamin, Dimethylethanolamin, Diethylethanolamin, Triethanolamin, Kaliumhydroxid oder Natriumcarbonat eingesetzt, bevorzugt Triethylamin, Triethanolamin, Dimethylethanolamin oder Diisopropylethylamin.

Die Stoffmenge, der Basen liegt zwischen 50 und 100 %, bevorzugt zwischen 60 und 90 % der Stoffmenge der anionischen Gruppen. Im Falle kationischer Gruppen werden Schwefelsäuredimethylester oder Bernsteinsäure eingesetzt. Werden nur nichtionisch hydrophilierte Verbindungen A5) mit Ethergruppen verwendet, entfällt der Neutralisationsschritt. Die Neutralisation kann auch gleichzeitig mit der Dispergierung erfolgen, in dem das Dispergierwasser bereits das Neutralisationsmittel enthält.

Im Anschluss wird in einem weiteren Verfahrensschritt B), falls noch nicht oder nur teilweise unter A) geschehen das erhaltene Prepolymer mit Hilfe von aliphatischen Ketonen wie Aceton oder Butanon gelöst.

Im Verfahrensschritt C) werden die Komponente C1) sowie mögliche NH₂- und/oder NHfunktionelle Komponenten C2) mit den noch verbliebenen Isocyanatgruppen umgesetzt. Diese Kettenverlängerung/-terminierung kann dabei entweder in Lösungsmittel vor dem Dispergieren, während des Dispergierens oder in Wasser nach dem Dispergieren durchgeführt werden.

Werden zur Kettenverlängerung in C2) Verbindungen entsprechend der Definition von A4) mit NH₂- oder NH-Gruppen eingesetzt, erfolgt die Kettenverlängerung der Prepolymere bevorzugt vor der Dispergierung.

Der Kettenverlängerungsgrad, also das Äquivalentverhältnis von NCO-reaktiven Gruppen der zur Kettenverlängerung in C1) und ggf. C2) eingesetzten Verbindungen zu freien NCO-Gruppen des Prepolymers liegt üblicherweise zwischen 40 bis 200 %, bevorzugt zwischen 70 bis 180 %, besonders bevorzugt zwischen 80 bis 160 % und ganz besonders bevorzugt zwischen 101 bis 150 %, wobei C1) in einer Menge zuzusetzen ist, dass mindestens 40 %, bevorzugt mindestens 50 % und besonders bevorzugt mindestens 70 % der NCO-Gruppen mit Verbindungen der Komponente C1) umgesetzt sind.

Auch die Terminierung des Prepolymers können in C2) auch Monoamine wie z.B. Diethylamin, Dibutylamin, Ethanolamin, N-Methylethanolamin oder N,N-Diethanolamin verwendet werden.

Die aminischen Komponenten C1) und ggf. C2) können gegebenenfalls in wasser- oder lösemittelverdünnter Form im erfindungsgemäßen Verfahren einzeln oder in Mischungen eingesetzt werden, wobei grundsätzlich jede Reihenfolge der Zugabe möglich ist.

Wenn Wasser oder organische Lösemittel als Verdünnungsmittel mitverwendet werden so beträgt der Verdünnungsmittelgehalt bevorzugt 70 bis 95 Gew.-%.

Bevorzugt wird zur Kettenverlängerung erst die Komponente C1) mit den Verbindungen aus C2) entsprechend der Definition von A4) zugebeben und anschließend erst mit den Verbindungen aus C2) entsprechend den Definitionen von A2) und/oder A3) versetzt.

Üblicherweise erfolgt die Herstellung der PUR-Dispersionen aus den Prepolymeren im Anschluss an die Kettenverlängerung (Schritt C)). Dazu wird das gelöste und kettenverlängerte Polyurethanpolymer gegebenenfalls unter starker Scherung, wie z.B. starkem Rühren, entweder in das Dispergierwasser eingetragen oder man rührt umgekehrt das Dispergierwasser zu den Prepolymerlösungen. Bevorzugt wird das Wasser in das gelöste Prepolymer gegeben.

Grundsätzlich kann nach dem Dispergierschritt eine weitere Kettenverlängerung durch Zugabe weiterer Mengen C1) und C2) durchgeführt werden, bevorzugt wird die Kettenverlängerung aber ausschließlich vor der Dispergierung durchgeführt.

Das in den Dispersionen nach dem Dispergierschritt noch enthaltene Lösemittel wird üblicherweise anschließend destillativ entfernt. Eine Entfernung bereits während der Dispergierung ist ebenfalls möglich.

Die so erhaltenen Dispersionen haben einen Festkörpergehalt von 10 bis 70 Gew.-%, bevorzugt 25 bis 65 Gew.-% und besonders bevorzugt 30 bis 65 Gew.-%.

Je nach Neutralisationsgrad und Gehalt ionischer Gruppen kann die Dispersion sehr feinteilig eingestellt werden, so dass sie praktisch das Aussehen einer Lösung hat, aber auch sehr grobteilige Einstellungen sind möglich, die ebenfalls ausreichend stabil sind.

Weiterhin ist es möglich, die erhältlichen wässrigen PUR-Dispersionen durch Polyacrylate zu modifizieren. Hierzu wird in diesen Polyurethan-Dispersionen eine Emulsionspolymerisation von olefinisch ungesättigten Monomeren, z.B. Estern aus (Meth)acrylsäure und Alkoholen mit 1 bis 18 C-Atomen, Styrol, Vinylestern oder Butadien durchgeführt, wie es zum Beispiel in der DE-A 19 53 348, EP-A 0 167 188, EP-A 0 189 945 und EP-A 0 308 115 beschrieben ist.

Neben einer oder mehreren olefinische Doppelbindungen können diese Monomere auch funktionelle Gruppen wie Hydroxyl-, Epoxy-, Methylol- oder Acetoacetoxygruppen enthalten.

Die Herstellung der Bestandteile der Komponente II) erfolgt üblicherweise dermaßen, dass zunächst ein isocyanatfunktionelles Prepolymer aus Verbindungen entsprechend der Definition den Komponenten A1) bis A5) hergestellt wird und in einem zweiten Reaktionsschritt durch Reaktion mit Verbindungen entsprechend der Definition der Komponenten A3) und C1), in nicht-wässrigem Medium ein OH- und/oder NH-funktionelles Polyurethan erhalten wird, wie z.B. EP-A 0 355 682 , S. 4, Z. 39 - 45, beschrieben. Die Herstellung kann aber auch so erfolgen, dass das OH- und / oder NH-Gruppen enthaltende Polyurethanharz direkt durch Umsetzung der Komponenten A1) bis A5) in nicht-wässrigem Medium gebildet wird, wie z.B. in EP-A 0 427 028, S.4, Z. 54 - S. 5, Z.1, beschrieben.

Die zum Aufbau dieses Prepolymers eingesetzten Verbindungen entsprechend der Definition der Komponente A2) kann, muss aber nicht zwingend, zuvor einem Destillationsschritt unter vermindertem Druck unterzogen werden. Dazu werden diese Verbindungen bevorzugt kontinuierlich in einem Dünnschichtverdampfer bei Temperaturen ≥150°C, bevorzugt bei 170 bis 230°C, besonders bevorzugt bei 180 bis 220°C, unter einem vermindertem Druck von ≤ 10 mbar, bevorzugt ≤ 2 mbar, besonders bevorzugt ≤ 0,5 mbar destilliert. Niedermolekulare, nichtreaktive flüchtige Anteile werden unter diesen Bedingungen abgetrennt. Bei der Destillation werden flüchtige Anteile von 0,2 bis 15 Gew.-%, bevorzugt 0,5 bis 10 Gew.-%, besonders bevorzugt 1 bis 6 Gew.-% abgetrennt.

Die Prepolymer-Herstellung wird normalerweise bei Temperaturen von 0° bis 140°C, je nach Reaktivität des eingesetzten Isocyanats, durchgeführt. Zur Beschleunigung der Urethänisierungsreaktion können geeignete Katalysatoren, wie sie zur Beschleunigung der NCO/OH-Reaktion dem Fachmann bekannt sind, eingesetzt werden. Beispiele hierfür sind tertiäre Amine wie Triethylamin oder Diazobicyclooctan, Organozinnverbindungen wie z.B. Dibutylzinnoxid, Dibutylzinndilaurat oder Zinn-bis(2-ethylhexanoat) oder andere metallorganische Verbindungen.

Die Prepolymer-Herstellung wird bevorzugt in Gegenwart von gegenüber Isocyanaten inerten Lösemitteln durchgeführt. Hierfür kommen insbesondere solche Lösemittel in Betracht, die mit Wasser verträglich sind, wie Ether, Ketone und Ester sowie N-Methylpyrrolidon. Die Menge dieses Lösungsmittels überschreitet zweckmäßigerweise nicht 30 Gew.% und liegt bevorzugt im Bereich von 10 bis 25 Gew.-%, jeweils bezogen auf die Summe aus Polyurethanharz und Lösemittel.

Die im so erhältlichen Prepolymer eingebauten Säuregruppen werden zumindest anteilig neutralisiert. Dies kann während oder auch nach der Prepolymerherstellung aber auch während oder nach der Dispergierung in Wasser durch Zugabe geeigneter Neutralisationsmittel erfolgen. Bevorzugt werden hierzu tertiäre Amine wie Trialkylamine mit 1 bis 12, vorzugsweise 1 bis 6 C-Atomen in jedem Alkylrest eingesetzt. Beispiele hierfür sind Trimethylamin, Triethylamin, Methyldiethylamin, Tripropylamin und Diisopropylethylamin. Die Alkylreste können beispielsweise auch Hydroxylgruppen tragen, wie bei den Dialkylmonoalkanol-, Alkyldialkanol- und Trialkanolaminen. Beispiel hierfür ist Dimethylethanolamin, das bevorzugt als Neutralisationsmittel dient. Als Neutralisationsmittel sind gegebenenfalls auch anorganische Basen, wie Ammoniak oder Natrium- bzw. Kaliumhydroxid einsetzbar. Das Neutralisationsmittel wird zumeist im Molverhältnis zu den Säuregruppen des Prepolymers von ca. 0,3:1 bis 1,3:1, vorzugsweise von ca. 0,4:1 bis 1:1 eingesetzt.

Bevorzugt wird der Neutralisationsschritt im Anschluss an die Prepolymerherstellung durchgeführt, wobei grundsätzlich bei Temperaturen von 0 bis 80°C, bevorzugt 40 bis 80°C gearbeitet wird.

Anschließend wird das hydroxyfunktionelle Polyurethan durch Zugabe von Wasser oder durch Eintragen in Wasser in eine wässrige Dispersion überführt.

Die Harze der nach dem vorhergehend beschriebenen Vorgehensweise erhältlichen PUR-, Dispersionen der Komponente II) besitzen im allgemeinen ein zahlenmittleres Molekulargewicht Mₙ von 1 000 bis 30 000, vorzugsweise 1 500 bis 10 000, eine Säurezahl von 10 bis 80, vorzugsweise 15 bis 40 mg KOH/g und einen OH-Gehalt von 0,5 bis 5 Gew.-%, bevorzugt 1,0 bis 3,5 Gew.-%.

Durch Kombination mit geeigneten Vernetzern der Komponente III) können, je nach Reaktivität oder gegebenenfalls Blockierung der Vernetzer, sowohl Einkomponentenlacke als auch Zweikomponentenlacke hergestellt werden. Unter Einkomponentenlacken im Sinne der vorliegenden Erfindung sind dabei Überzugsmittel zu verstehen, bei denen Bindemittelkomponente und Vernetzerkomponente zusammen gelagert werden können, ohne dass eine Vernetzungsreaktion in merklichen bzw. für die spätere Applikation schädlichen Ausmaß stattfindet. Die Vernetzungsreaktion findet erst bei Applikation nach einer Aktivierung des Vernetzers statt. Diese Aktivierung kann z.B. durch Temperatursteigerung bewirkt werden.

Unter Zweikomponentenlacken im Sinne der vorliegenden Erfindung versteht man Überzugsmittel, bei denen Bindemittelkomponente und Vernetzerkomponente aufgrund ihrer hohen Reaktivität in getrennten Gefäßen gelagert werden müssen. Die beiden Komponenten werden erst kurz vor Applikation gemischt und reagieren dann im Allgemeinen ohne zusätzliche Aktivierung. Zur Beschleunigung der Vernetzungsreaktion können aber auch Katalysatoren eingesetzt oder höhere Temperaturen angewendet werden.

Geeignete Vernetzer sind beispielsweise Polyisocyanat-Vernetzer, Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wie sie in "Lackkunstharze", H. Wagner, H.F. Sarx, Carl Hanser Verlag München, 1971, beschrieben sind.

Bevorzugt werden als Vernetzer der Komponente III) Polyisocyanate mit freien Isocyanat-Gruppen eingesetzt, da die erhaltenen wässrigen Polyurethanlacke ein besonders hohes lacktechnische Niveau zeigen. Geeignete Vernetzer III) sind beispielsweise 1-Isocyanato-3,3,5-trimethyl-5-isocyanatomethyl-cyclohexan, Hexamethylendiisocyanat, 1,4-Diisocyanatocyclohexan oder Bis-(4-isocyanatocyclohexan)-methan oder 1,3-(Bis-2-isocyanatopropyl-2)-benzol oder auf Basis von Lackpolyisocyanaten wie Uretdion-, Biuret-, Isocyanurat- oder Iminooxadiazindiongruppen aufweisenden Polyisocyanaten von Hexamethylendiisocyanat, 1-Isocyanato-3,3,5-trimethyl-5-isocyanatomethyl-cyclohexan oder Bis-(4-isocyanatocyclohexan)-methan oder Urethangruppen aufweisenden Lackpolyisocyanaten auf Basis von 2,4- und/oder 2,6-Diisocyanatotoluol oder 1-Isocyyanato-3,3,5-trimethyl-5-isocyanatomethyl-cyclohexan einerseits und niedermolekularen Polyhydroxylverbindungen wie Trimethylolpropan, den isomeren Propandiolen oder Butandiolen oder beliebigen Gemischen derartiger Polyhydroxylverbindungen andererseits.

Gegebenenfalls können die genannten, freie Isocyanatgruppen enthaltenden Verbindungen durch Umsetzung mit sogenannten Blockierungsmitteln in weniger reaktive Derivate überführt werden, welche dann erst nach Aktivierung beispielsweise bei höheren Temperaturen reagieren. Geeignete Blockierungsmittel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Cyclohexanonoxim, Lactame wie ε-Caprolactam, Phenole, Amine wie Diisopropylamin oder Dibutylamin, tert.-Butylbenzylamin, Dimethylpyrazol oder Triazol sowie Malonsäuredimethylester, Malonsäurediethylester oder Malonsäuredibutylester.

Bevorzugt ist der Einsatz niedrigviskoser, hydrophober oder hydrophilierter Polyisocyanate der vorstehend genannten Art mit freien Isocyanatgruppen auf Basis aliphatischer, cycloaliphatischer, araliphatischer und/oder aromatischer Isocyanate, besonders bevorzugt aliphatischer oder cycloaliphatischer Isocyanate, da sich so ein besonders hohes Beständigkeitsniveau des Lackfilms erreichen lässt. Diese Polyisocyanate weisen bei 23°C im allgemeinen eine Viskosität von 10 bis 3500 mPas auf.

Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken. Auch Triisocyanatononan kann allein oder in Mischungen in Komponente III) eingesetzt werden.

Das hier beschriebenen Komponenten I) und II) sind im allgemeinen ausreichend hydrophil, so dass die Dispergierbarkeit auch hydrophober Vernetzer aus Komponente III) gewährleistet ist. Falls gewünscht können aber auch zusätzliche externe Emulgatoren wie sie dem Fachmann bekannt sind zugesetzt werden.

Es können aber auch wasserlösliche bzw. dispergierbare, blockierte Polyisocyanate wie sie z.B. durch Modifikation mit Carboxylat-, Sulfonat- und/oder Polyethylenoxidgruppen und/oder Poly-ethylenoxid/Polypropylenoxidgruppen erhältlich sind in Komponente III) eingesetzt werden.

Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985, S. 3, Z 55 ; S. 4 Z. 5 beschrieben. Gut geeignet sind auch die in der EP-A-959087, S. 3 Z. 39 - 51 beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 100 078 21, S. 2 Z. 66 - S. 3 Z. 5, beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE 10024624, S. 3 Z. 13 - 33 beschrieben sind. Ebenso möglich ist die Hydrophilierung durch Zusatz handelsüblicher Emulgatoren.

Prinzipiell möglich ist natürlich auch der Einsatz von Mischungen verschiedener Vernetzerharze der vorstehend genannten Art in der Komponente III).

Als weitere filmbildende Harze der Komponente IV) sind in Wasser dispergierbare, emulgierbare oder lösliche Polymere geeignet, die sich von den Bestandteilen der Komponenten I) bis III) unterscheiden. Beispiele hierfür sind gegebenenfalls epoxidgruppenhaltige Polyester, Polyurethane, Acrylpolymere, Vinylpolymere wie Polyvinylacetat, Polyurethandispersionen, Polyacrylat-Dispersionen, Polyurethan-Polyacrylat-Hybriddispersionen, Polyvinylether- bzw. Polyvinylester-dispersionen, Polystyrol- bzw. Polyacrylnitrildispersionen. Der Feststoffgehalt der filmbildenden Harze der Komponente IV) beträgt vorzugsweise 10 bis 100 Gew.-% besonders bevorzugt 30 bis 100 Gew.-%.

Das Verhältnis des Vernetzers III) zu den mit ihm reaktiven Verbindungen der Komponenten II) und ggf. IV) ist so zu wählen, dass das Verhältnis von den reaktiven Gruppen des Vernetzers (bei Isocyanaten NCO-Gruppen) zu den gegenüber dem Vernetzer reaktiven Gruppen aus II) und IV). (z.B. OH-Gruppen) 0,5 : 1,0 bis 3,5 : 1,0 bevorzugt 1,0 : 1,0 bis 3,0 : 1,0 und besonders bevorzugt 1,0 : 1,0 bis 2,5 : 1,0 beträgt.

Die Mischung der Komponenten I), II) und IV) enthält bevorzugt 5 bis 95 Gew.-%, besonders bevorzugt 25 bis 75 Gew.-% der Komponente II), wobei die Mengen von I) und IV) so zu wählen sind, dass die Gesamtmengen von I), II) und IV) sich zu 100 Gew.-% aufaddieren.

Als lackübliche Hilfs- und Zusatzmittel können in den erfindungsgemäßen Beschichtungsmitteln die dem Fachmann bekannten Stoffe wie Entschäumungsmittel, Verdickungsmittel, Pigmente, Dispergierhilfsmittel, Mattierungsmittel, Katalysatoren, Hautverhinderungsmittel, Antiabsetzmittel und/oder Emulgatoren, sowie Additive, die den gewünschten Softfeel-Effekt verstärken, enthalten sein. Dabei ist es unerheblich zu welchem Zeitpunkt der Herstellung diese den erfindungsgemäßen Beschichtungsmitteln zugesetzt oder in diese eingearbeitet werden.

Die erfindungsgemäßen, wässrigen Beschichtungsmittel eignen sich für alle Einsatzgebiete, in denen wässrige Anstrich- und Beschichtungssysteme mit hohen Anforderungen an die Oberflächengüte Beständigkeit der Filme Verwendung finden, z.B. Beschichtung mineralischer Baustoff-Oberflächen, Lackierung und Versiegelung von Holz und Holzwerkstoffen, Beschichtung metallischer Oberflächen (Metallbeschichtung), Beschichtung und Lackierung asphalt- oder bitumenhaltiger Beläge, Lackierung und Versiegelung diverser Kunststoffoberflächen (Kunststoffbeschichtung) sowie Hochglanzlacke.

Insbesondere sind sie aber zur Erzeugung von thermovergilbungsstabilen Softfeel-Effektlacken, die gute Lösemittelbeständigkeit und insbesondere gute Beständigkeit gegen Sonnenmilch (Suntan-Lotion-Test) gewährleisten, geeignet. Bevorzugt werden solche Beschichtungsmittel in der Kunststofflackierung oder der Holzlackierung eingesetzt, wobei die Aushärtung üblicherweise bei Temperaturen zwischen Raumtemperatur und 130°C erfolgt. Die Zweikomponenten-Technologie mit nicht-blockierten Polyisocyanaten als Vernetzer erlaubt dabei die Verwendung vergleichsweise niedriger Aushärtetemperaturen in o.g. Intervall.

Die erfindungsgemäßen, wässrigen Beschichtungsmittel werden üblicherweise in Einschichtlacken oder in der Klar- oder Decklackschicht (oberste Schicht) von Mehrschichtaufbauten eingesetzt.

Die Herstellung der erfindungsgemäßen Beschichtung kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die Lacke und Beschichtungsmittel, enthaltend die erfindungsgemäßen Bindemitteldispersionen, können jedoch auch nach anderen Methoden, beispielsweise durch Streichen, Rollen oder Rakeln appliziert werden.

### Beispiele

Soweit nicht abweichend angegeben sind alle Prozentangaben als Gewichtsprozent zu verstehen.

### Verwendete Substanzen und Abkürzungen:

### Diaminosulfonat:

NH₂-CH₂CH₂-NH-CH₂CH₂-SO₃Na (45 % ig in Wasser)

### Bayhydrol^{®} XP 2429:

Aliphatische hydroxyfunktionelle Polyesterpolyurethan-Dispersion mit einem Festkörpergehalt von 55 %, Bayer AG, Leverkusen, DE.

### BYK 348:

### Benetzungsmittel (BYK-Chemie, Wesel, DE)

Tego-Wet KL 245 (50%ig in Wasser):
Verlaufsadditiv (Degussa AG, Essen, DE)

### Bayhydur^{®} 3100:

Hydrophiles, aliphatisches Polyisocyanat auf Basis Hexamethylendiisocyanat (HDI) mit einem Isocyanatgehalt von 17,4 %; Bayer AG, Leverkusen, DE

### Bayhydur^{®} VPLS 2306:

Hydrophil modifiziertes, aliphatisches Polyisocyanat auf Basis von Hexamethylendiisocyanat (HDI) mit einem Isocyantgehalt von 8,0 %; Bayer AG, Leverkusen ,DE

Desmodur^{®} XP 2410:
Niedrigviskoses, aliphatisches Polyisocyanat-Harz auf Basis Hexamethylendiisocyanat mit einem Isocyanatgehalt von 24,0 %; Bayer AG, Leverkusen ,DE

### MPA: 1-Methoxy-2-propylacetat

Die Bestimmung der Festkörpergehalte erfolgte nach DIN-EN ISO 3251. NCO-Gehalte wurden, wenn nicht ausdrücklich anders erwähnt, volumetrisch gemäß DIN-EN ISO 11909 bestimmt. Die Vergilbung (b*, Δb*-Werte) wurde mit Hilfe der CIELAB-Methode (DIN 5033) ermittelt.

### Beispiel 1: Vergleichsbeispiel

Bayhydrol^{®} PR 240 (anionisch hydrophilierte PUR-Dispersion mit einem Festkörpergehalt von 40 % und einer mittleren Teilchengröße von 100 bis 300 nm, Bayer AG, Leverkusen, DE)

### Beispiel 2: Vergleichsbeispiel

Bayhydrol^{®} VP LS 2305 (anionisch und nichtionisch hydrophilierte PUR-Dispersion mit einem Festkörpergehalt von 40 % und einer mittleren Teilchengröße von 100 bis 300 nm, Bayer AG, Leverkusen, DE)

### Beispiel 3:

1453,5 g Polyester PE 170 HN (Polyesterpolyol, OH-Zahl 66 mg KOH/g, zahlenmittleres Molekulargewicht 1700 g/mol, Bayer AG, Leverkusen, DE), 64,1 g Polyether LB 25 (monofunktioneller Polyether auf Ethylenoxid-/Propylenoxidbasis zahlenmittleres Molekulargewicht 2250 g/mol, OH-Zahl 25 mg KOH/g, Bayer AG, Leverkusen, DE) und 0,1 g Desmorapid^{®} Z (Dibutylzinndilaurat, Bayer AG, Leverkusen, DE) wurden auf 65°C aufgeheizt. Anschließend wurde bei 65°C innerhalb von 5 min ein Gemisch aus 432,3 g Isophorondiisocyanat und 343,9 g Aceton zugegeben und solange unter Rückfluss gerührt bis der theoretische NCO-Wert erreicht wurde. Das fertige Prepolymer wurde mit 2298,5 g Aceton bei 50°C gelöst und anschließend eine Lösung aus 40,6 g Hydrazinhydrat, 48,5 g Isophorondiamin und 421,1 g Wasser innerhalb von 10 min zudosiert. Nach Zugabe von 60,1 g Diaminosulfonat innerhalb von 5 min ließ man 15 min nachrühren und dispergierte durch Zugabe von 2608,4 g Wasser innerhalb von 10 min. Es folgte die Entfernung des Lösemittels durch Destillation im Vakuum und man erhielt eine lagerstabile Dispersion mit einem Festkörpergehalt von 41,0 %.

### Beispiel 4:

1530,0 g Polyester PE 170 (Polyesterpolyol, OH-Zahl 66 mg KOH/g, zahlenmittleres Molekulargewicht 1700 g/mol, Bayer AG, Leverkusen, DE), 67,5 g Polyether LB 25 (monofunktioneller Polyether auf Ethylenoxid-/Propylenoxidbasis zahlenmittleres Molekulargewicht 2250 g/mol, OH-Zahl 25 mg KOH/g, Bayer AG, Leverkusen, DE) und 0,1 g Desmorapid^{®} Z (Dibutylzinndilaurat, Bayer AG, Leverkusen, DE) wurden auf 65°C aufgeheizt. Anschließend wurde bei 65°C innerhalb von 5 min ein Gemisch aus 537,1 g Desmodur^{®} W (Bis-(4,4`-isocyanatocyclohexyl)methan, Bayer AG, Leverkusen, DE) und 355,0 g Aceton zugegeben und solange unter Rückfluss gerührt bis der theoretische NCO-Wert erreicht wurde. Das fertige Prepolymer wurde mit 1766,0 g Aceton bei 50°C gelöst und anschließend eine Lösung aus 50,0 g Hydrazinhydrat, 51,0 g Isophorondiamin und 401,3 g Wasser innerhalb von 10 min zudosiert. Nach Zugabe von 63,3 g Diaminosulfonat innerhalb von 5 min ließ man 15 min nachrühren und dispergierte durch Zugabe von 2915,0 g Wasser innerhalb von 10 min. Es folgte die Entfernung des Lösemittels durch Destillation im Vakuum und man erhielt eine lagerstabile Dispersion mit einem Festkörpergehalt von 41,0%.

Die Zusammensetzungen der erfindungsgemäßen Beschichtungsmittel sind in Tabelle 1 beschrieben. Zur Herstellung der Beschichtungsmittel wurden jeweils die Dispersionen aus Teil I (siehe Tabelle 1) vorgelegt, die Additive (Teil II) zugegeben und 30 min verrührt. Anschließend erfolgte die Zugabe der Vernetzer (Teil III). Nach einer Verrührzeit von 5 Minuten wurden die Beschichtungsmittel auf Glas- und Makrofol^{®} Platten (Bayer AG, Leverkusen, DE) aufgesprüht. Nach Applikation wurden die Platten 10 min bei 23°C abgelüftet, anschließend 30 min bei 80°C und 16 h bei 60°C getrocknet. Die Trockenfilmschichtdicke betrug 20 µm.

**Tabelle 1: Beschichtungsmittel**

| **Beispiel** | **5 (Vergleich)** | **6 (Vergleich)** | **7** | **8** | **9 (Vergleich)** | **10 (Vergleich)** | **11** | **12** |
|---|---|---|---|---|---|---|---|---|
| **Teil I** | | | | | | | | |
| Bayhydrol^{®} XP 2429 | 50 | 50 | 50 | 50 | 50 | 50 | 50 | 50 |
| PUR-Dispersion aus Beispiel 1 | 68,8 | - | - | - | 68,8 | - | - | - |
| PUR-Dispersion aus Beispiel 2 | - | 68,8 | - | - | - | 68,8 | - | - |
| PUR-Dispersion aus Beispiel 3 | - | - | 67,1 | - | - | - | 67,1 | - |
| PUR-Dispersion aus Beispiel 4 | - | - | - | 67,1 | - | - | - | 67,1 |

| **Teil II** | | | | | | | | |
|---|---|---|---|---|---|---|---|---|
| Byk 348 | 0,8 | 0,8 | 0,8 | 0,8 | 0,8 | 0,8 | 0,8 | 0,8 |
| Tego-Wet KL 245 | 0,6 | 0,6 | 0,6 | 0,6 | 0,6 | 0,6 | 0,6 | 0,6 |
| Wasser, demin. | 84,0 | 84,0 | 85,6 | 85,6 | 85,5 | 85,5 | 87,1 | 87,1 |

| **Teil III** | | | | | | | | |
|---|---|---|---|---|---|---|---|---|
| B'dur 3100; 75%ig in MPA | 11,4 | 11,4 | 11,4 | 11,4 | - | - | - | - |
| B'dur VP LS 2360 / D'dur XP 2410; 75% ig in MPA | - | - | - | - | 12,4 | 12,4 | 12,4 | 12,4 |
| Summe | 215,6 | 215,6 | 215,5 | 215,5 | 218,1 | 218,1 | 218,0 | 218,0 |

Die beschichteten und getrockneten Platten wurden dann bei 90°C bzw. 120°C thermisch belastet und die Veränderungen der Vergilbung mit Hilfe von CIELAB-Messungen zeitabhängig verfolgt (siehe Tabelle 2 bis 5).

**Tabelle 2: Vergilbungswerte bei 90°C Lagerung auf Glas**

| **Glas** | **Schichtdicke** | **0 h** | **500 h** | **1000 h** | **1500 h** | **2000 h** | **2500 h** |
|---|---|---|---|---|---|---|---|
| **Beispiel** | **[µm]** | **b*** | **Δ b*** | **Δ b*** | **Δ b*** | **Δ b*** | **Δ b*** |
| **5 (Vergleich)** | 20 | 1,83 | 0,96 | 1,27 | 1,55 | 1,76 | 1,90 |
| **6 (Vergleich)** | 20 | 1,80 | 0,79 | 1,24 | 1,34 | 1,57 | 1,77 |
| **7** | 20 | 1,72 | 0,82 | 0,90 | 1,15 | 1,36 | 1,45 |
| **8** | 20 | 1,79 | 0,82 | 0,93 | 1,04 | 1,39 | 1,41 |
| **9 (Vergleich)** | 20 | 1,79 | 1,09 | 1,41 | 1,66 | 1,88 | 2,03 |
| **10 (Vergleich)** | 20 | 1,71 | 0,87 | 1,45 | 1,61 | 1,98 | 2,18 |
| **11** | 20 | 1,76 | 0,75 | 0,99 | 1,09 | 1,23 | 1,26 |
| **12** | 20 | 1,74 | 0,82 | 1,14 | 1,20 | 1,64 | 1,62 |

**Tabelle 3: Vergilbungswerte bei 90°C Lagerung auf Makrofol^{®}**

| **Makrofol^{®}** | **Schichtdicke** | **0 h** | **500 h** | **1000 h** | **1500 h** | **2000 h** | **2500 h** |
|---|---|---|---|---|---|---|---|
| **Beispiel** | **[µm]** | **b*** | **Δ b*** | **Δ b*** | **Δ b*** | **Δ b*** | **Δ b*** |
| **5 (Vergleich)** | 20 | 1,51 | 0,89 | 1,37 | 1,48 | 1,55 | 1,78 |
| **6 (Vergleich)** | 20 | 1,58 | 0,56 | 1,15 | 1,33 | 1,61 | 1,77 |
| **7** | 20 | 1,58 | 0,43 | 1,19 | 0,98 | 1,06 | 1,52 |
| **8** | 20 | 1,49 | 0,55 | 0,96 | 0,80 | 1,13 | 1,30 |
| **9 (Vergleich)** | 20 | 1,54 | 0,66 | 1,33 | 1,19 | 1,55 | 1,71 |
| **10 (Vergleich)** | 20 | 1,50 | 0,61 | 1,16 | 1,07 | 1,51 | 1,69 |
| **11** | 20 | 1,57 | 0,49 | 0,96 | 0,91 | 1,18 | 1,16 |
| **12** | 20 | 1,46 | 0,76 | 1,07 | 1,08 | 1,42 | 1,49 |

**Tabelle 4: Vergilbungswerte bei 120°C Lagerung auf Glas**

| **Glas** | **Schichtdicke** | **0 h** | **100 h** | **250 h** | **500 h** |
|---|---|---|---|---|---|
| **Beispiel** | **[µm]** | **b*** | **Δ b*** | **Δ b*** | **Δ b*** |
| **5 (Vergleich)** | 20 | 1,83 | 1,87 | 3,23 | 4,58 |
| **6 (Vergleich)** | 20 | 1,80 | 1,41 | 2,93 | 4,73 |
| **7** | 20 | 1,72 | 0,75 | 1,38 | 2,62 |
| **8** | 20 | 1,79 | 0,78 | 1,99 | 3,35 |
| **9 (Vergleich)** | 20 | 1,79 | 2,11 | 3,87 | 5,30 |
| **10 (Vergleich)** | 20 | 1,71 | 2,53 | 4,69 | 6,61 |
| **11** | 20 | 1,76 | 0,68 | 1,69 | 2,87 |
| **12** | 20 | 1,74 | 0,63 | 2,01 | 3,46 |

**Tabelle 5: Vergilbungswerte bei 120°C Lagerung auf Makrofol^{®}**

| **Makrofol** | **Schichtdicke** | **0 h** | **100 h** | **250 h** | **500 h** |
|---|---|---|---|---|---|
| **Beispiel** | **[µm]** | **b*** | **Δ b*** | **Δ b*** | **Δ b*** |
| **5 (Vergleich)** | 20 | 1,51 | 1,22 | 1,97 | 2,70 |
| **6 (Vergleich)** | 20 | 1,58 | 0,59 | 1,20 | 2,05 |
| **7** | 20 | 1,58 | 0,35 | 0,87 | 1,65 |
| **8** | 20 | 1,49 | 0,41 | 0,91 | 1,83 |
| **9 (Vergleich)** | 20 | 1,54 | 2,01 | 2,33 | -3,74 |
| **10 (Vergleich)** | 20 | 1,50 | 0,84 | 1,73 | 2,76 |
| **11** | 20 | 1,57 | 0,46 | 0,83 | 1,68 |
| **12** | 20 | 1,46 | 0,79 | 1,35 | 2,40 |

Die Vergilbungswerte belegen, dass die erfindungsgemäßen Beschichtungsmittel (Beispiel 7, 8, 11, 12) im Vergleich zu den Systemen des Stands der Technik (Beispiel 5, 6, 9, 10) signifikant geringere Vergilbungswerte nach thermischer Belastung sowohl auf Glas als auch auf Kunststoff (Makrofol^{®}, Bayer AG, Leverkusen, DE) aufweisen.

Die erfindungsgemäßen Beschichtungsmittel aus Beispiel 7, 8, 11 und 12 besitzen darüber hinaus zu den Beispielen des Stands der Technik (Beispiel 5, 6, 9, 10) vergleichbare mechanische und haptische Eigenschaften.

## Patentansprüche

1. Beschichtungsmittel enthaltend
I) eine oder mehrere Dispersionen hydroxylgruppenfreier Polyurethane und/oder Polyurethanharnstoffe (PUR-Dispersionen)
II) eine oder mehrere von den Bestandteilen der Komponente I) verschieden wässrige Lösungen oder Dispersionen ionisch modifizierter, hydroxylgruppenhaltiger Polyurethane und/oder Polyurethanharnstoffe und
III) mindestens einen Vernetzer und
IV) gegebenenfalls weitere filmbildende Harze
**dadurch gekennzeichnet, dass** die in I) eingesetzten PUR-Dispersionen erhältlich sind, in dem
A) zunächst ein NCO-gruppenhaltiges Polyurethanprepolymer durch Umsetzung von
A1) Polyisocyanaten mit
A2) polymeren Polyolen und/oder Polyaminen mit zahlenmittleren Molekulargewichten von 400 bis 8 000 g/mol,
A3) gegebenenfalls niedermolekularen Verbindungen mit zahlenmittleren Molekulargewichten von 17 bis 400 g/mol ausgewählt aus der Gruppe bestehend aus Mono- und Polyalkoholen, Mono- und Polyaminen sowie Aminoalkoholen,
A4) isocyanatreaktiven, ionisch oder potentiell ionisch hydrophilierenden Verbindungen und/oder
A5) isocyanatreaktiven nichtionisch hydrophilierenden Verbindungen
A6) gegebenenfalls in aliphatischen Ketonen als Lösemittel
mit der Maßgabe hergestellt wird, dass in keiner der Komponenten A1) bis A5) primäre oder sekundäre Aminogruppen enthalten sind,
B) das aus Schritt A) erhaltene Prepolymer entweder in aliphatischen Ketonen gelöst oder, sofern die Herstellung bereits in Anwesenheit von A6) durchgeführt wurde, die Prepolymerlösung gegebenenfalls durch weitere Zugabe aliphatischer Ketone verdünnt wird und
C) die noch freien NCO-Gruppen des Prepolymers mit einer Kettenverlängerungs-komponente enthaltend
C1) Hydrazin und/oder Hydrazinhydrat und
C2) gegebenenfalls Verbindungen entsprechend der Definition der Komponenten A2), A3), A4) und/oder A5)
mit der Maßgabe umgesetzt werden, dass
• die Verbindungen der Komponente C2) primäre und/oder sekundäre Aminogruppen aufweisen,
• die Gesamtmengen von C1) und C2) so bemessen sind, dass ein rechnerischer Kettenverlängerungsgrad von 40 bis 200 % erreicht wird und
• das Mengenverhältnis von C1) und C2) so bemessen ist, dass mindestens 40 % der freien Isocyanatgruppen mit Aminogruppen aus der Komponente C1) kettenverlängert bzw. terminiert werden.

2. Beschichtungsmittel gemäß Anspruch 1, **dadurch gekennzeichnet, dass** bei der Herstellung der PUR-Dispersionen in Schritt B) und gegebenenfalls Schritt A) Aceton oder Butanon als Lösemittel eingesetzt wird.

3. Beschichtungsmittel gemäß Anspruch 1 oder 2, **dadurch gekennzeichnet, dass** bei der Herstellung der PUR-Dispersionen in den Schritten A) bis C) 8 bis 27 Gew.-% Komponente A1), 65 bis 85 Gew.-% Komponente A2), 0 bis 8 Gew.-% Komponente A3), 0 bis 10 Gew.-% Komponente A4), 0 bis 15 Gew.-% Komponente A5), 1,0 bis 2,5 Gew.-% C1) (bezogen auf reines Hydrazin N₂H4), und 0 bis 8 Gew.-% C2) eingesetzt, wobei die Summe von A4), und A5) 0,1 bis 25 Gew.-% beträgt und sich die Summe der Komponenten zu 100 Gew.-% aufaddiert.

4. Beschichtungsmittel gemäß einem der Ansprüche 1 bis 3, **dadurch gekennzeichnet, dass** bei der Herstellung der PUR-Dispersionen die Mengen von C1) und C2) so bemessen werden, dass ein rechnerischer Kettenverlängerungsgrad von 101 bis 150 % resultiert.

5. Beschichtungsmittel gemäß einem der Ansprüche 1 bis 4, **dadurch gekennzeichnet, dass** in III) als Vernetzer Polyisocyanate verwendet werden.

6. Beschichtungsmittel gemäß Anspruch 5, **dadurch gekennzeichnet, dass** das Verhältnis von NCO-Gruppen der Komponente III) zu den OH-Gruppen der Komponenten II) und IV) 1,0 : 1,0 bis 2,5 : 1,0 beträgt.

7. Beschichtungsmittel gemäß einem der Ansprüche 1 bis 6, **dadurch gekennzeichnet, dass** die Mischung der Komponenten I), II) und IV) 25 bis 75 Gew.-% Komponente II) enthält und die Mengen von I) und IV) so gewählt werden, dass die Gesamtmengen von I), II) und IV) sich zu 100 Gew.-% aufaddieren.

8. Verwendung von Beschichtungsmitteln gemäß einem der Ansprüche 1 bis 7 bei der Herstellung von Beschichtungen.

9. Beschichtungen hergestellt unter Verwendung von Beschichtungsmitteln gemäß einem der Ansprüche 1 bis 7.

10. Substrate beschichtet mit Beschichtungen gemäß Anspruch 9.

## Claims

1. Coating materials comprising
I) one or more dispersions of hydroxyl-free polyurethanes and/or polyurethane-ureas (PU dispersions)
II) one or more aqueous solutions or dispersions of ionically modified, hydroxyl-containing polyurethanes and/or polyurethane-ureas, other than the constituents of component I), and
III) at least one crosslinker and
IV) optionally further film-forming resins, **characterized in that** the PU dispersions used in I) are obtainable by
A) first preparing an NCO-containing polyurethane prepolymer by reacting
A1) polyisocyanates with
A2) polymeric polyols and/or polyamines having number-average molecular weights of 400 to 8000 g/mol,
A3) optionally low molecular weight compounds having number-average molecular weights of 17 to 400 g/mol selected from the group consisting of mono- and polyalcohols, mono-and polyamines and also amino alcohols,
A4) isocyanate-reactive, ionically or potentially ionically hydrophilicizing compounds and/or
A5) isocyanate-reactive nonionically hydrophilicizing compounds
A6) optionally in aliphatic ketones as solvents
with the proviso that none of components A1) to A5) contains primary or secondary amino groups,
B) either dissolving the prepolymer obtained from step A) in aliphatic ketones or, if preparation has already been carried out in the presence of A6), diluting the prepolymer solution optionally by further addition of aliphatic ketones, and
C) reacting the remaining free NCO groups of the prepolymer with a chain extender component comprising
C1) hydrazine and/or hydrazine hydrate and
C2) optionally compounds meeting the definition of components A2), A3), A4) and/or A5),
with the proviso that
• the compounds of component C2) contain primary and/or secondary amino groups,
• the total amounts of C1) and C2) are such that an arithmetic degree of chain extension of 40 to 200% is attained and
• the proportion of C1) and C2) is such that at least 40% of the free isocyanate groups are terminated by and/or chain-extended with amino groups from component C1).

2. Coating materials according to Claim 1, **characterized in that** in preparing the PU dispersions in step B) and optionally step A) acetone or butanon is used as solvent.

3. Coating materials according to Claim 1 or 2, **characterized in that** in preparing the PU dispersions use is made of 8 to 27% by weight of component A1), 65 to 85% by weight of component A2), 0 to 8% by weight of component A3), 0 to 10% by weight of component A4), 0 to 15% by weight of component A5), 1.0 to 2.5% by weight of C1) (based on pure hydrazine, N₂H₄) and 0 to 8% by weight of C2) in steps A) to C), the sum of A4) and A5) being 0.1 to 25% by weight and the sum of the components adding to 100% by weight.

4. Coating materials according to any one of Claims 1 to 3, **characterized in that** in preparing the PU dispersions the amounts of C1) and C2) are such that an arithmetic degree of chain extension of 101 to 150% results.

5. Coating materials according to any one of Claims 1 to 4, **characterized in that** in III) polyisocyanates are used as crosslinkers.

6. Coating materials according to Claim 5, **characterized in that** the ratio of NCO groups of component III) to the OH groups of components II) and IV) is from 1.0 : 1.0 to 2.5 : 1.0.

7. Coating materials according to any one of Claims 1 to 6, **characterized in that** the mixture of components I), II) and IV) contains 25 to 75% by weight of component II) and the amounts of I) and IV) are chosen such that the total amounts of I), II) and IV) add up to 100% by weight.

8. Use of coating materials according to any one of Claims 1 to 7 in the production of coatings.

9. Coatings produced using coating materials according to any one of Claims 1 to 7.

10. Substrates coated with coatings according to Claim 9.

## Revendications

1. Agent de revêtement, contenant :
I) une ou plusieurs dispersions de polyuréthanes et/ou polyuréthane-urées exempts de groupes hydroxyle (dispersions de PUR),
II) une ou plusieurs solutions ou dispersions aqueuses de polyuréthanes et/ou polyuréthane-urées contenant des groupes hydroxyle, modifiés ioniquement, différentes des constituants du composant I), et
III) au moins un agent de réticulation, et
IV) éventuellement des résines filmogènes supplémentaires,
**caractérisé en ce que** les dispersions de PUR utilisées en I) peuvent être obtenues par
A) tout d'abord fabrication d'un prépolymère de polyuréthane contenant des groupes NCO par mise en réaction de
A1) des polyisocyanates avec
A2) des polyols et/ou polyamines polymères ayant des poids moléculaires moyens en nombre de 400 à 8 000 g/mol,
A3) éventuellement des composés de poids moléculaire faible ayant des poids moléculaires moyens en nombre de 17 à 400 g/mol, choisis dans le groupe constitué par les mono- et polyalcools, les mono- et polyamines et les aminoalcools,
A4) des composés hydrophilisants ioniques ou potentiellement ioniques réactifs avec les isocyanates et/ou
A5) des composés hydrophilisants non ioniques réactifs avec les isocyanates,
A6) éventuellement dans des cétones aliphatiques en tant que solvant,
à condition que des groupes amino primaires ou secondaires ne soient contenus dans aucun des composants A1) à A5),
B) dissolution du prépolymère obtenu à l'étape A) dans des cétones aliphatiques ou, si la fabrication a déjà été réalisée en présence d'A6), éventuellement dilution de la solution de prépolymère par ajout supplémentaire de cétones aliphatiques, et
C) mise en réaction des groupes NCO encore libres du prépolymère avec un composant allongeur de chaînes contenant
C1) de l'hydrazine et/ou de l'hydrazine hydratée, et
C2) éventuellement des composés correspondant à la définition des composants A2), A3), A4) et/ou A5),
à condition que
- les composés selon le composant C2) comprennent des groupes amino primaires et/ou secondaires,
- les quantités totales de C1) et C2) soient déterminées de sorte qu'un degré d'allongement de chaînes calculé de 40 à 200 % soit atteint, et
- la proportion de C1) et C2) soit déterminée de sorte qu'au moins 40 % des groupes isocyanate libres soient allongés ou terminés avec des groupes amino du composant C1).

2. Agent de revêtement selon la revendication 1, **caractérisé en ce que** de l'acétone ou de la butanone est utilisée en tant que solvant lors de la fabrication des dispersions de PUR à l'étape B) et éventuellement à l'étape A).

3. Agent de revêtement selon la revendication 1 ou 2, **caractérisé en ce que**, lors de la fabrication des dispersions de PUR aux étapes A) à C), 8 à 27 % en poids du composant A1), 65 à 85 % en poids du composant A2), 0 à 8 % en poids du composant A3), 0 à 10 % en poids du composant A4), 0 à 15 % en poids du composant A5), 1,0 à 2,5 % en poids de C1) (par rapport à l'hydrazine pure N₂H₄) et 0 à 8 % en poids de C2) sont utilisés, la somme de A4) et A5) étant de 0,1 à 25 % en poids et la somme des composants étant de 100 % en poids.

4. Agent de revêtement selon l'une quelconque des revendications 1 à 3, **caractérisé en ce que**, lors de la fabrication des dispersions de PUR, les quantités de C1) et C2) sont déterminées de sorte qu'un degré d'allongement des chaînes calculé de 101 à 150 % soit obtenu.

5. Agent de revêtement selon l'une quelconque des revendications 1 à 4, **caractérisé en ce que** des polyisocyanates sont utilisés en tant qu'agent de réticulation en III).

6. Agent de revêtement selon la revendication 5, **caractérisé en ce que** le rapport entre les groupes NCO du composant III) et les groupes OH des composants II) et IV) est de 1,0:1,0 à 2,5:1,0.

7. Agent de revêtement selon l'une quelconque des revendications 1 à 6, **caractérisé en ce que** le mélange des composants I), II) et IV) contient 25 à 75 % en poids du composant II) et les quantités de I) et IV) sont choisies de sorte que la somme des quantités totales de I), II) et IV) soit de 100 % en poids.

8. Utilisation d'agents de revêtement selon l'une quelconque des revendications 1 à 7 lors de la fabrication de revêtements.

9. Revêtement fabriqués en utilisant des agents de revêtement selon l'une quelconque des revendications 1 à 7.

10. Substrats revêtus avec des revêtements selon la revendication 9.
